(19) Europäisches Patentamt
European Patent Office
Office européen des brevets

(11) EP 2 278 299 B1

(12) # FASCICULE DE BREVET EUROPEEN

(45) Date de publication et mention de la délivrance du brevet:
**14.03.2012 Bulletin 2012/11**

(51) Int Cl.:
***G01N 15/08*** *(2006.01)* ***G01N 21/21*** *(2006.01)*
***G01N 21/95*** *(2006.01)* ***G01N 21/956*** *(2006.01)*

(21) Numéro de dépôt: **10169992.4**

(22) Date de dépôt: **19.07.2010**

(54) **Procédé de caractérisation optique**

Verfahren zur optischen Kennzeichnung

Method of optical characterisation

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **20.07.2009 FR 0955027**

(43) Date de publication de la demande:
**26.01.2011 Bulletin 2011/04**

(73) Titulaires:
- **Commissariat à l'Énergie Atomique et aux Énergies Alternatives**
  **75015 Paris (FR)**
- **Centre National de la Recherche Scientifique (C.N.R.S)**
  **75016 Paris (FR)**

(72) Inventeurs:
- **Licitra, Christophe**
  **38100, Grenoble (FR)**
- **Besacier, Maxime**
  **38430, Saint Jean de Moirans (FR)**
- **Bouyssou, Régis**
  **38600, Fontaine (FR)**
- **Chevolleau, Thierry**
  **38000, Grenoble (FR)**
- **El Kodadi, Mohamed**
  **38100, Grenoble (FR)**

(74) Mandataire: **Lebkiri, Alexandre**
**Cabinet Camus Lebkiri**
**87 Rue Taitbout**
**75009 Paris (FR)**

(56) Documents cités:
**WO-A1-00/12999 WO-A2-2006/123030**
**US-A1- 2003 168 594**

- **LICITRA C ET AL: "Evaluation of ellipsometric porosimetry for in-line characterization of ultra low-[kappa] dielectrics" PHYSICA STATUS SOLIDI C WILEY-VCH VERLAG GMBH GERMANY, vol. 5, no. 5, 22 février 2008 (2008-02-22), pages 1278-1282, XP008118339 ISSN: 1610-1634**
- **BAKLANOV M R ET AL: "Determination of pore size distribution in thin films by ellipsometric porosimetry" JOURNAL OF VACUUM SCIENCE & TECHNOLOGY B: MICROELECTRONICSPROCESSING AND PHENOMENA, AMERICAN VACUUM SOCIETY, NEW YORK, NY, US, vol. 18, no. 3, 1 mai 2000 (2000-05-01), pages 1385-1391, XP012008204 ISSN: 0734-211X**
- **BAKLANOV M R ET AL: "Non-destructive characterisation of porosity and pore size distribution in porous low-K dielectric films" SOLID-STATE AND INTEGRATED-CIRCUIT TECHNOLOGY, 2001. PROCEEDINGS. 6TH INTERNATIONAL CONFERENCE ON OCT. 22-25, 2001, PISCATAWAY, NJ, USA,IEEE, vol. 1, 22 octobre 2001 (2001-10-22), pages 352-357, XP010575979 ISBN: 978-0-7803-6520-9**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé de caractérisation optique. Le procédé selon l'invention est plus particulièrement adapté à la caractérisation des matériaux poreux utilisés dans les circuits intégrés microélectroniques.

Les structures d'interconnexions pour les circuits intégrés microélectroniques, par exemple des transistors, sont conventionnellement réalisées par des lignes métalliques, typiquement en Aluminium ou en Cuivre. Ces lignes métalliques sont séparées par un matériau diélectrique qui sert à isoler aussi bien latéralement les lignes que verticalement les niveaux de métal. L'enjeu est de s'affranchir des dégradations des caractéristiques électriques des matériaux diélectriques situés entre les lignes métalliques d'interconnexion lorsque la taille desdites lignes diminue. En effet, l'amélioration des propriétés des transistors est liée à la diminution de leurs dimensions qui entraîne la réduction des tailles des lignes et de l'espacement entre ces lignes. Malheureusement, le rapprochement des lignes provoque l'apparition de capacités parasites inter lignes.

De façon connue, une des voies pour maintenir les performances consiste à remplacer le matériau diélectrique inter lignes par un matériau à faible constante diélectrique qui permet un abaissement du couplage capacitif entre les lignes adjacentes. Pour parvenir à baisser la constante diélectrique, une solution consiste à introduire de la porosité dans le matériau diélectrique. Une difficulté majeure réside alors dans le fait de pouvoir conserver les propriétés poreuses du matériau lors de son intégration dans des circuits microélectroniques.

Dès lors, il est nécessaire de pouvoir contrôler les propriétés poreuses de ces matériaux à faible constante diélectrique.

Une première solution connue permettant de caractériser la porosité et la taille des pores consiste à utiliser une technique d'adsorption couplée à une mesure de masse. Ces mesures par pesée nécessitent toutefois des échantillons épais afin d'observer une variation de masse significative pendant l'adsorption.

Une autre solution connue permettant de caractériser la porosité et la taille des pores de matériaux déposés en couche mince consiste à utiliser une technique d'adsorption couplée cette fois à une mesure ellipsométrique. Un tel procédé est notamment décrit dans la demande de brevet WO 00/12999. Une telle solution présente toutefois certains inconvénients.

En effet, lors de l'intégration des matériaux poreux en microélectronique, un des problèmes est de pouvoir mesurer les propriétés desdits matériaux lors de leur intégration, c'est-à-dire lorsque ceux-ci se trouvent non plus sous forme de films minces mais sous formes de motifs issus des étapes classiques de lithographie et gravure. Or les mesures par ellipsométrie porosimétrique sont adaptées pour la mesure de films minces poreux. Une telle solution ne permet donc pas de caractériser le matériau poreux au plus près de son utilisation finale, c'est-à-dire lorsqu'il est sous la forme de motifs poreux issus des étapes de lithographie et de gravure. Cette caractérisation des motifs est fondamentale dans la mesure où les propriétés des matériaux poreux peuvent évoluer lors des étapes de lithographie et de gravure.

Dans la demande de brevet US2003/0168594-A1, un procédé d'utilisation d'un scattéromètre et microscope à force atomique intégrés pour contrôler un procédé de fabrication d'une tranche est décrit, comprenant la mesure d'une caractéristique dans une zone de mesure de la tranche en utilisant le microscope à force atomique et la génération des graphiques scattérometriques de bibliothèques, suivies par la mesure sur la tranche en utilisant le scattéromètre en combinaison avec les graphiques scattérometriques de bibliothèques générés pour déterminer un paramètre de la zone de mesure.

Dans ce contexte, la présente invention a pour but de fournir un procédé de caractérisation optique non destructif permettant notamment d'obtenir les propriétés de matériaux poreux lorsque ces derniers sont intégrés sur les circuits microélectroniques.

A cette fin, l'invention propose un procédé de caractérisation optique de structures élémentaires répétées de façon régulière afin de former une structure de diffraction, chaque structure élémentaire comportant au moins un motif géométrique, chacun desdits motifs étant réalisé au moins partiellement à l'aide d'un matériau poreux, ledit procédé comportant les étapes de :

- détermination de paramètres géométriques desdits motifs ;
- acquisition scatterométrique de la réponse optique expérimentale de ladite structure de diffraction placée dans une chambre à une pression donnée, la présence d'une substance gazeuse adsorbable dans ladite chambre entraînant la condensation de ladite substance dans au moins une partie des pores ouverts des motifs de la structure ;
- détermination de la réponse optique théorique de ladite structure de diffraction à partir des paramètres géométriques déterminés et en ajustant l'indice optique du matériau de la zone de chacun desdits motifs dans laquelle s'est condensée la substance gazeuse adsorbable de façon à rendre l'écart entre ladite réponse expérimentale et ladite réponse théorique inférieur ou égal à un seuil donné.

On entend par matériau poreux, un matériau susceptible d'adsorber la substance gazeuse adsorbable utilisée lorsque cette dernière est maintenue sous pression au contact du matériau.

On entend par indice optique du matériau poreux, l'indice effectif complexe de ce matériau poreux avec la substance gazeuse adsorbable condensée, la partie réelle de cet indice correspondant à l'indice de réfraction et sa partie imaginaire correspondant au coefficient d'extinction. L'indice de réfraction du matériau avec la substance gazeuse adsorbable condensée traduit le fait que les différentes longueurs d'onde ne traversent pas le matériau à la même vitesse et induit un changement de direction d'un rayon lumineux au passage d'un dioptre selon la loi de Descartes.

On entend par réponse optique, tout type de réponse optique de la structure de diffraction que l'on veut caractériser, que la technique de mesure soit ellipsométrique (spectrométrique ou goniométrique) ou réflectométrique (spectroscopique ou goniométrique).

La substance gazeuse adsorbable est préférentiellement sélectionnée de sorte que l'interaction entre la substance gazeuse adsorbable condensée et le matériau poreux soit la plus faible possible. En outre, la substance gazeuse adsorbable est de préférence admise dans la chambre pressurisée à une température ambiante de 21 °C et possède une température de condensation comprise entre 25°C et 100°C et une pression d'équilibre comprise entre 1,3 et 13,3 kPa (10 et 100 Torr). Dans ce dernier cas, les mesures peuvent être réalisées à la température ambiante. Certains solvants organiques sous forme vapeur peuvent être utilisés en tant que substance gazeuse adsorbable.

On entend par pores ouverts les pores connectés à la surface du matériau (i.e. ceux dans lesquels la substance gazeuse adsorbable est susceptible de se condenser à partir de la surface du matériau.

Grâce à l'invention, on utilise avantageusement la scattérométrie (en anglais « scatterometry ») sur la gamme spectrale permettant d'obtenir une figure de diffraction (typiquement pour un matériau diélectrique tel que le SiOCH poreux, la gamme spectrale utilisable comprend celle des UV et celle du visible). La scattérométrie va permettre de déterminer l'indice du matériau poreux à une pression donnée et pour chaque longueur d'onde de la gamme spectrale utilisée. La technique de caractérisation scatterométrique consiste en une mesure sur la structure de diffraction à l'aide d'une onde électromagnétique polarisée. On peut ainsi suivre l'évolution de l'indice du matériau poreux en fonction de la pression dans la chambre en réalisant plusieurs mesures à des pressions différentes dans la chambre. De façon connue, en scattérométrie classique, seules les dimensions des motifs sont recherchées (typiquement la largeur, la hauteur et éventuellement la pente des flancs) et les indices des matériaux sont fixés lors de l'analyse. Au contraire, lors d'une mesure de scattérométrie porosimétrique selon l'invention, l'indice effectif du matériau (poreux + substance gazeuse adsorbable condensée) change en fonction de la quantité de substance adsorbée dans les pores et c'est cet indice que l'on va ajuster en fonction des conditions expérimentales de manière à pouvoir caractériser la porosité du matériau. En d'autres termes, on adapte l'analyse de scattérométrie à la problématique de la porosimétrie en ajustant non plus les dimensions des motifs mais l'indice de la partie poreuse du motif à chaque mesure. Une modélisation des indices à chacune des étapes de la phase d'adsorption et de la phase de désorption est alors nécessaire. Contrairement à la scattérométrie classique où l'on recherche des dimensions, le procédé selon l'invention intègre une étape préalable de détermination (au moins partielle) des dimensions des motifs, ces dimensions étant ensuite figées lors des étapes d'ajustement des indices optiques avec des mesures sous pression. Les dimensions peuvent être par exemple déterminées avec une première mesure sous vide ou en s'aidant de caractérisations complémentaires telles que des mesures par microscopie électronique à balayage MEB ou par microscopie à force atomique en trois dimensions AFM-3D. La modélisation des motifs pour l'obtention d'une signature théorique peut être par exemple obtenue par une méthode d'analyse rigoureuse des ondes couplées dite méthode RCWA (« Rigorous Coupled Wave Analysis» en anglais). Finalement, l'indice du matériau poreux à une longueur d'onde donnée peut ensuite être utilisé pour remonter à la quantité de substance gazeuse adsorbable qui s'est condensée dans les pores du matériau en fonction de la pression de substance gazeuse adsorbable dans la chambre grâce à une loi d'approximation de milieux effectifs EMA (« Effective Medium Approximation » en anglais).

Contrairement à l'ellipsométrie porosimétrique qui est réalisée sur un film mince, le procédé selon la présente invention concerne une méthode de mesure non destructive par voie optique capable de déterminer les propriétés des motifs poreux au plus près de leur utilisation au sein du circuit microélectronique ; ces propriétés peuvent être par exemple : la porosité, la distribution en taille des pores, la cinétique de diffusion, la perméabilité et la mouillabilité du matériau poreux.

Le procédé selon l'invention peut également présenter une ou plusieurs des caractéristiques ci-dessous, considérées individuellement ou selon toutes les combinaisons techniquement possibles :

- la taille de ladite structure de diffraction est supérieure à la taille du spot optique utilisé pour la mesure scatterométrique ;
- ladite structure de diffraction comporte au moins dix motifs ;
- chaque motif est une ligne en matériau diélectrique apte à isoler deux lignes métalliques ;
- l'acquisition scatterométrique est réalisée par ellipsométrie ;
- l'étape de détermination de paramètres géométriques desdits motifs comporte une étape d'acquisition scatterométrique de la réponse optique expérimentale de ladite structure de diffraction placée dans la chambre sous vide et une étape détermination de la réponse optique théorique de ladite structure de diffraction à partir des indices optiques des motifs sous vide et en ajustant les dimensions desdits motifs de façon à rendre l'écart entre ladite réponse expérimentale et ladite réponse théorique inférieur ou égal à un seuil donné ;
- avantageusement, l'étape de détermination de paramètres géométriques desdits motifs comporte une étape de mesure par microscopie électronique à balayage et/ou par microscopie à force atomique en trois dimensions ; cette étape permet d'obtenir une image réelle du motif qui vient compléter les paramètres géométriques obtenus par scattérométrie sous vide (qui utilise comme paramètres d'entrées les formes et dimensions théoriques des motifs). Il se peut en effet que l'image réelle du motif diffère du motif que l'on souhaitait effectivement réaliser (typiquement à cause de problèmes liés à la gravure, on peut avoir une forme des flancs différente de celle attendue). Dans ce cas, l'utilisation, une mesure MEB ou AFM-3D s'avère particulièrement utile.

- le procédé selon l'invention comporte une pluralité d'étapes d'acquisition scatterométrique à des pressions données différentes, chaque étape d'acquisition étant suivie d'une étape de détermination de la réponse optique théorique de la structure de diffraction par ajustement d'indice optique ;
- le procédé selon l'invention comporte une étape de détermination dudit indice optique ajusté en fonction de la pression sur toute la gamme de longueurs d'onde utilisées pour les étapes d'acquisition scatterométrique ;
- ladite pluralité d'étapes d'acquisition scatterométrique à des pressions données différentes se fait selon une variation croissante de la pression correspondant à une adsorption progressive de ladite substance gazeuse adsorbable dans les pores ouverts desdits motifs et/ou selon une variation décroissante de la pression correspondant à une désorption progressive de ladite substance gazeuse adsorbable dans les pores ouverts desdits motifs ;
- la pression varie d'une pression de vide résiduel jusqu'à la pression de vapeur saturante de ladite substance gazeuse adsorbable et/ou de la pression de vapeur saturante de ladite substance gazeuse adsorbable jusqu'à une pression de vide résiduelle ;
- l'indice optique du matériau ajusté à une pression donnée est utilisé pour déterminer la quantité de substance gazeuse adsorbable qui s'est condensée dans les pores ouverts ;
- la détermination de la quantité de substance gazeuse adsorbable condensée se fait en déterminant la fraction volumique de substance gazeuse adsorbable condensée dans les pores ouverts via une loi d'approximation de milieux effectifs EMA ;
- le procédé selon l'invention comporte une étape de détermination de la distribution en taille des pores ouverts ;
- la valeur de taux de porosité ouverte dudit matériau poreux formant au moins partiellement lesdits motifs est obtenue via l'ajustement de l'indice optique à la pression de vapeur saturante de ladite substance gazeuse adsorbable ;
- chacun desdits motifs comporte une première couche supérieure réalisée dans un matériau non poreux déposée sur la surface d'une seconde couche comportant au moins une partie dans un matériau non susceptible d'adsorber la substance gazeuse adsorbable utilisée lorsque cette dernière est maintenue sous pression à son contact et au moins une partie, telle que l'un de ses flancs, dans un matériau poreux, l'écart entre ladite réponse expérimentale à une pression donnée et ladite réponse théorique étant rendu inférieur ou égal à un seuil donné en ajustant :

  o l'indice optique du matériau de la zone de ladite partie poreuse dans laquelle s'est condensée la substance gazeuse adsorbable et ;
  o un paramètre géométrique représentatif de la taille de la zone de ladite partie poreuse dans laquelle s'est condensée la substance gazeuse adsorbable ;

ledit procédé comportant une pluralité d'étapes d'acquisition scatterométrique à des pressions données différentes, chaque étape d'acquisition étant suivie d'une étape de détermination de la réponse optique théorique de la structure de diffraction par ajustement dudit indice optique et dudit paramètre géométrique ;

- ladite substance gazeuse adsorbable est un solvant polaire tel que l'eau ;
- chacun desdits motifs comporte une première couche supérieure réalisée dans un matériau non poreux déposée sur la surface d'une seconde couche réalisée dans un matériau poreux, l'écart entre ladite réponse expérimentale à une pression donnée et ladite réponse théorique étant rendu inférieur ou égal à un seuil donné en ajustant :

  o l'indice optique du matériau de la zone de ladite seconde couche dans laquelle s'est condensée la substance gazeuse adsorbable et ;
  o un paramètre géométrique représentatif de la taille de la zone de ladite seconde couche poreuse dans laquelle s'est condensée la substance gazeuse adsorbable ;

ledit procédé comportant une pluralité d'étapes d'acquisition scatterométrique en fonction du temps de diffusion de ladite substance gazeuse adsorbable à l'intérieur de ladite seconde couche à partir des flancs de celle-ci, chaque étape d'acquisition étant suivie d'une étape de détermination de la réponse optique théorique de la structure de diffraction par ajustement dudit indice optique et dudit paramètre géométrique ;

- le matériau de la couche non poreuse ainsi que son épaisseur sont choisis de sorte que ladite couche non poreuse soit transparente aux longueurs d'onde utilisées pour les étapes d'acquisition scatterométrique ;

- une couche supérieure réalisée dans un matériau perméable à caractériser est déposée sur la surface supérieure des motifs réalisés dans un matériau poreux, l'écart entre ladite réponse expérimentale à une pression donnée et ladite réponse théorique étant rendu inférieur ou égal à un seuil donné en ajustant :

  o l'indice optique du matériau de la zone desdits motif poreux dans laquelle s'est condensée la substance gazeuse adsorbable et ;
  o un paramètre géométrique représentatif de la taille de la zone desdits motifs poreux dans laquelle s'est condensée la substance gazeuse adsorbable ;

ledit procédé comportant une pluralité d'étapes d'acquisition scatterométrique en fonction du temps de diffusion de ladite substance gazeuse adsorbable à l'intérieur desdits motifs à partir des flancs de ceux-ci, chaque étape d'acquisition étant suivie d'une étape de détermination de la réponse optique théorique de la structure de diffraction par ajustement dudit indice optique et dudit paramètre géométrique ;

- ladite étape de détermination de la réponse optique théorique de ladite structure de diffraction est réalisée par une méthode d'analyse rigoureuse des ondes couplées dite méthode « RCWA ».

D'autres caractéristiques et avantages de l'invention ressortiront clairement de la description qui en est donnée ci-dessous, à titre indicatif et nullement limitatif, en référence aux figures annexées, parmi lesquelles :

- la figure 1 illustre schématiquement le principe et les conditions opératoires d'une mesure optique qui est utilisable dans le procédé selon l'invention;
- les figures 2a à 2c sont des agrandissements de la structure à caractériser représentée en figure 1, correspondant à différents états d'adsorption de substance gazeuse adsorbable dans les motifs;
- la figure 3 illustre le principe de l'ellipsométrie spectroscopique;
- la figure 4 illustre un premier mode de réalisation du procédé selon l'invention ;
- la figure 5 représente un exemple d'évolution en adsorption et en désorption d'un indice de réfraction effectif déterminé par le procédé selon l'invention en fonction de la pression relative à une longueur d'onde donnée ;
- la figure 6 représente un exemple d'évolution en adsorption et en désorption de la fraction volumique de substance gazeuse adsorbable déterminée par le procédé selon l'invention en fonction de la pression relative à une longueur donnée ;
- la figure 7 représente un exemple de distribution en taille des pores au sein des motifs d'une structure analysée par le procédé selon l'invention ;
- les figures 8 et 9 illustrent une structure à caractériser selon un second mode de réalisation de l'invention ;
- la figure 10 illustre un second mode de réalisation du procédé selon l'invention
- les figures 11 et 12 illustrent une structure à caractériser selon un troisième mode de réalisation de l'invention ;
- les figures 13 et 14 illustrent une structure à caractériser selon un quatrième mode de réalisation de l'invention.

La figure 1 illustre schématiquement le principe et les conditions opératoires d'une mesure optique qui est utilisable dans le procédé selon l'invention. On y voit une structure 1 à caractériser optiquement formant un réseau de diffraction. La figure 2a est un agrandissement de la structure 1 de diffraction représentée en figure 1. La structure 1 comporte une pluralité de motifs 2 identiques ou sensiblement identiques et disposés périodiquement (i.e. régulièrement espacés selon une période d'espacement P). Ces motifs 2 sont des motifs poreux, c'est-à-dire réalisés au moins partiellement dans un matériau poreux tel qu'un matériau diélectrique dont lequel on a introduit de la porosité. On entend par motif poreux, un motif intégrant une pluralité de trous 3 (les points représentant la matière) de taille variable dans le matériau et permettant l'adsorption d'une substance gazeuse adsorbable. Ces motifs 2 sont préférentiellement des lignes poreuses parallèles espacées d'une distance P et dont on veut caractériser la porosité. Chaque motif 2 (ayant sensiblement une hauteur h et une largeur l) est formé sur un substrat 4, la structure 1 de diffraction ayant au moins une dizaine de lignes 2 poreuses parallèles. La taille caractéristique des motifs 2 de la structure 1 (i.e. la largeur l de la ligne 2) est de préférence équivalente à la taille des bandes de diélectrique qui isolent deux lignes de métal (typiquement la largeur des lignes de métal lorsque les lignes 2 sont réalisées dans un matériau diélectrique poreux servant à isoler lesdites lignes métalliques). Une telle structure 1 de diffraction peut être usuellement prévue dans les zones de service des masques microélectroniques (zone dite de scattérométrie servant habituellement à mesurer les dimensions des motifs) ; en d'autres termes, il s'agit dans ce cas d'une zone dédiée (zone de service) sur le wafer qui sera ensuite perdue pendant la découpe ; une autre manière de procéder peut consister à réaliser des échantillons tests représentant la configuration réelle des lignes diélectriques. La taille globale de la structure 1 de diffraction est supérieure à la taille du spot optique utilisé (typiquement 50 $\mu$m à 200 $\mu$m de diamètre) de manière à ce que le spot de mesure soit contenu dans la structure 1.

Tout ou partie de la porosité du matériau poreux utilisé pour le motif 2 est dite ouverte, c'est-à-dire connectée à la surface du matériau ; c'est cette zone ouverte (porosité ouverte) qui sera caractérisée par la suite. La structure 1 est placée dans une chambre 5 d'un dispositif 6 à ellipsométrie porosimétrique.

Le dispositif 6 à ellipsométrie porosimétrique comporte :

- la chambre 5 ;
- une pompe 7 pour modifier la pression régnant à l'intérieur de la chambre 5, ladite pompe étant reliée à la chambre 5 via une vanne de réglage 8 ;
- des moyens 9 (typiquement des réservoirs 9 contenant la substance gazeuse adsorbable) pour alimenter en substance gazeuse adsorbable la chambre 5, les moyens 9 étant reliés à la chambre 5 via une vanne de réglage 10 ;
- une jauge de pression 11 pour mesurer la pression dans la chambre 5 ;
- un hublot 12 permettant le passage du signal lumineux pour la réalisation de la mesure et un hublot 12' permettant de faire sortir le signal lumineux.

La structure 1 est éclairée par une onde lumineuse spéculaire 13 à une longueur d'onde donnée émise par une source lumineuse non représentée ; la lumière réfléchie 14 forme la réponse optique expérimentale de la structure 1 qu'il convient d'analyser. Il est entendu qu'il est possible de réaliser des mesures en utilisant des longueurs d'onde différentes pour l'onde incidente.

Grâce à la configuration du dispositif 6, il est possible d'injecter une substance gazeuse adsorbable dans la chambre 5 via les moyens d'alimentation 9 et la vanne de réglage 10 et de faire varier la pression dans la chambre 5 via la pompe 7 et la vanne de réglage 8.

A titre purement illustratif, la substance gazeuse adsorbable peut être obtenue à partir du toluène, du méthanol, de l'eau ou de l'isopropanol.

Une séquence d'adsorption et de désorption de substance gazeuse adsorbable peut donc être réalisée sur la structure 1 tandis qu'une acquisition optique scatterométrique est réalisée parallèlement sur cette même structure en fonction de la pression de substance gazeuse adsorbable dans la chambre 5.

On peut de la sorte réaliser une acquisition scatterométrique de la réponse optique expérimentale de la structure 1 de diffraction de manière répétée alors que la pression dans la chambre 5 varie :

- pour l'adsorption, la pression varie d'un vide résiduel (on entend typiquement par vide résiduel une pression dans la chambre 5 comprise entre 1,3 et 0,13 Pa ($10^{-2}$ et $10^{-3}$ Torr) jusqu'à la pression de vapeur saturante de substance gazeuse adsorbable utilisée pour l'expérience (typiquement de 1,3 à 13,3 kPa (10 à 100 Torr) selon les substances gazeuses adsorbables et la température ambiante),
- pour la désorption : la pression varie inversement, de la pression de vapeur saturante de la substance gazeuse adsorbable jusqu'au vide résiduel.

Lors de l'étape d'adsorption (ou de manière symétrique pour la désorption), l'état de la structure 1 poreuse va évoluer de la manière suivante : à la pression de vide résiduel les pores sont vides (Figure 2a), puis, la pression augmentant dans la chambre 5 (pression intermédiaire entre le vide résiduel et la pression de vapeur saturante de la substance gazeuse adsorbable), on atteint un seuil pour lequel la substance gazeuse adsorbable se condense dans les plus petits pores (la figure 2b illustre ce phénomène où l'on observe que la substance gazeuse adsorbable 15 a commencé à remplir les pores des motifs 2). Enfin, la pression augmentant encore jusqu'à la pression de vapeur saturante de la substance gazeuse adsorbable, les plus grands pores se remplissent également par condensation capillaire (la figure 2c illustre ce phénomène). Au-delà la pression de vapeur saturante, l'augmentation de pression n'influe plus sur le remplissage des pores et l'expérience se termine quand la pression de vapeur saturante est atteinte. De façon connue, le principe de base de l'ellipsométrie est de mesurer le changement d'état de polarisation de la lumière induit par la réflexion sur une surface à analyser. La figure 3 illustre de façon générale ce principe, le vecteur d'onde **k** désignant la direction d'incidence de l'onde formant un angle θ avec la normale au plan de la surface à analyser. Le champ électrique incident $\mathbf{E^i}$ peut se décomposer en une composante parallèle $\mathbf{E_p^i}$ et une composante perpendiculaire $\mathbf{E_s^i}$ au plan d'incidence. De même, le champ électrique réfléchi $\mathbf{E^r}$ peut se décomposer en une composante parallèle $\mathbf{E_p^r}$ et une composante perpendiculaire $\mathbf{E_s^r}$ au plan d'incidence.

L'ellipsométrie consiste alors à mesurer la grandeur :

$$\rho = \tan(\psi)e^{j\Delta} = \frac{r_p}{r_s} \quad (1),$$

(1), où $r_P$ et $r_S$ sont les rapports (respectivement pour les composantes p et s) des amplitudes des champs incidents et réfléchis :

$$r_p = \frac{E_p^r}{E_p^i}$$

et

$$r_s = \frac{E_s^r}{E_s^i}.$$

La grandeur ρ est non seulement dépendante de l'échantillon visé par le rayon lumineux mais aussi de la longueur d'onde λ.

Dans le cas de l'ellipsométrie spectroscopique, la caractérisation de l'objet se fait en faisant varier la longueur d'onde λ sur une plage connue.

La scattérométrie consiste par exemple à réaliser une mesure ellipsométrique sur un échantillon périodique en utilisant avantageusement la diffraction de la lumière: si l'on possède a priori l'information que l'échantillon est périodique, il est alors possible d'acquérir d'avantage d'informations qu'en ellipsométrie simple.

Un système de mesure ellipsométrique fournit de manière générale un couple de signaux pour chaque longueur d'onde. Plusieurs couples sont couramment utilisées ; nous mentionnerons dans ce qui suit le couple (ψ, Δ) où ψ et Δ sont les grandeurs définies plus haut en référence à la relation (1). En l'espèce, selon le mode de réalisation décrit ici, le dispositif à ellipsométrie spectroscopique fournit deux signatures tan(ψ) et cos(Δ) en fonction de la longueur d'onde λ.

La figure 4 illustre les différentes étapes d'un premier mode de réalisation d'un procédé 100 selon l'invention.

La première étape 101 du procédé 100 selon l'invention consiste à déterminer au moins une partie des dimensions (typiquement les dimensions h et l, voire la pente des flancs) des motifs 2 de la structure 1 telle que représentée en figure 1. Cette détermination peut par exemple être obtenue par une mesure par microscopie électronique à balayage MEB ou par microscopie à force atomique en trois dimensions AFM-3D. Il est également possible de réaliser une première acquisition scatterométrique de la réponse optique expérimentale de la structure 1 de diffraction placée dans la chambre 5 sous vide résiduel (état de la structure 1 représenté en figure 2a). Cette première acquisition constitue une utilisation standard de la scattérométrie ; en d'autres termes, on part d'une structure dont on connait le matériau et l'indice optique initial sans substance gazeuse adsorbée dans les motifs (étape 111) et on détermine les grandeurs géométriques h et l du profil de la structure 1 préalablement modélisé.

Une séquence d'adsorption et de désorption de substance gazeuse adsorbable est réalisée sur la structure 1 tandis qu'une acquisition 102 optique scatterométrique est réalisée parallèlement sur le réseau poreux pour chaque pression de substance gazeuse adsorbable dans la chambre 5. En d'autres termes, pour une pression relative $P_{rel}$, de substance gazeuse adsorbable dans la chambre 5, on obtient deux signatures tan(ψ) et cos (Δ) en fonction de la longueur d'onde λ (une pluralité de signatures tan(ψ) et cors(Δ) correspondant aux différentes pressions de mesure sont représentées dans les cadres 103 et 104 en fonction de l'énergie E transportée par les photons exprimée en eV, l'énergie E étant directement dépendante de la longueur d'onde λ par la relation E=h·c/λ où h désigne la constante de Planck et c la vitesse de la lumière). On obtient donc une réponse optique expérimentale 105 en fonction de la longueur d'onde pour chaque pression. La pression relative $P_{rel}$ de la substance gazeuse adsorbable dans la chambre 5 est donnée par la relation : $P_{rel}=P/P_s$ où P est la pression dans la chambre 5 et $P_s$ est la pression de vapeur saturante de substance gazeuse adsorbable.

De façon générale, on sait que la signature optique d'un réseau change en fonction de ses dimensions ou de l'indice optique des matériaux qui le composent. En scattérométrie classique, seules les dimensions des lignes sont recherchées (largeur, hauteur, pente des flancs) et les indices des matériaux sont fixés lors de l'analyse.

Au contraire, selon l'invention, les dimensions sont fixées et calculées lors de la première étape 101 en s'aidant de caractérisations complémentaires telles que le MEB ou l'AFM-3D ou avec une première mesure sous vide. Pour chaque mesure 102 de scattérométrie porosimétrique, l'indice effectif du matériau (i.e. l'indice de l'ensemble incluant le matériau poreux formant le motif 2 et la substance gazeuse adsorbable condensée dans les pores ouverts des motifs 2) change en fonction de la quantité de substance gazeuse condensée dans les pores.

Le procédé selon l'invention comporte en outre, pour chaque pression relative $P_{rel}$, une étape 107 de détermination de la réponse optique théorique de la structure 1 en utilisant une méthode 106 de simulation. Une modélisation des motifs pour l'obtention de la signature théorique peut être par exemple obtenue par une méthode d'analyse rigoureuse des ondes couplées, dite méthode RCWA (« Rigorous Coupled Wave Analysis » en anglais), ou MMFE (Modal Method by Fourier Expansion). Une telle méthode de décomposition modale est notamment décrite dans la thèse « Développement de la scattérométrie dynamique pour le suivi en temps réel de procédés. Application à la microélectronique » (Sébastien Soulan - Université de Grenoble I - Joseph Fourier- Soutenue le 08/12/08).

Pour la mise en oeuvre de l'étape de simulation 106, une modélisation des indices optiques de réfraction à chaque étape d'adsorption et désorption (c'est à dire pour chaque pression relative $P_{rel}$ de substance gazeuse adsorbable dans la chambre) est également nécessaire. On utilise donc une loi de dispersion représentant l'indice optique dont les paramètres sont ajustés à chaque étape ; les variations des valeurs des parties réelle et imaginaire de l'indice optique peuvent par exemple être modélisées par des lois de Cauchy qui s'appliquent particulièrement bien aux matériaux diélectriques dont on cherche à caractériser la porosité : ce sont des fonctions de la longueur d'onde λ consistant à exprimer les indices optiques du matériau de la manière suivante : $\tilde{n}(\lambda) = \sum_{i\geq 1} \frac{a_i}{\lambda^{2(i-1)}}$. La plupart du temps, on n'utilise que les deux ou trois premiers termes de la somme : $a_1$, $a_2$ et $a_3$.

Le procédé selon l'invention comporte par ailleurs une étape 108 de minimisation de l'écart entre la réponse expérimentale 105 et la réponse théorique 107. Cette minimisation est rendue possible en ajustant (étape 109) les parties réelle et imaginaire de l'indice optique de façon à rendre l'écart entre la réponse expérimentale 105 et la réponse théorique 107 inférieur ou égal à un seuil donné. Un exemple de méthode 108 de minimisation est la méthode des bibliothèques. Cette méthode permet de résoudre le problème inverse (si l'on définit le problème direct comme le calcul d'une signature scatterométrique à partir d'un jeu de paramètres, le problème inverse consiste alors à trouver le jeu de paramètres à partir de la mesure de la signature scatterométrique). Cette méthode consiste à construire une base de données de signatures scatterométriques. Chaque signature est issue de la simulation (donc par exemple calculée avec une méthode RCWA). La méthode vise alors à comparer la signature acquise expérimentalement à l'ensemble des signatures de la base. Il s'agit d'une méthode de minimisation globale. On peut citer d'autres exemples de méthodes d'optimisation globale utilisables dans le procédé selon l'invention telles que les réseaux de neurones ou les algorithmes évolutionnaires (ou génétiques). La méthode du simplexe ou celle de Levenberg-Marquart qui sont des techniques d'optimisation locales peuvent également être utilisées.

Une fois l'optimisation réalisée au-travers de l'étape de minimisation 108, on obtient, pour chaque pression relative $P_{rel}$, un jeu de coefficient $a_1$, $a_2$ et $a_3$ (dans le cas de l'utilisation d'une loi de Cauchy) traduisant l'évolution des parties réelle et imaginaire de l'indice optique à la pression relative considérée. A chaque longueur d'onde $\lambda$ de la gamme spectrale utilisée pour la scattérométrie, on a donc une valeur de l'indice effectif optique $n(\lambda, P_{rel})$ (ici la partie réelle de l'indice) du matériau constituant le motif 2 (avec une certaine quantité de substance gazeuse adsorbable condensée dans les pores) pour une pression relative $P_{rel}$ donnée.

A titre d'exemple, la figure 5 représente l'évolution en adsorption (courbe 112) et en désorption (courbe 113) d'un indice de réfraction effectif $n(\lambda=633nm, P_{rel})$ en fonction de la pression relative à une longueur d'onde de 633nm déterminé par le procédé selon l'invention. On observe par ailleurs une évolution croissante de l'indice lorsque la pression relative augmente, l'indice augmentant plus faiblement lorsque la pression relative atteint une valeur égale à 0,2, l'ensemble des pores ouverts des motifs étant remplis lorsque la pression relative est égale à 1 (pression de vapeur saturante de substance gazeuse adsorbable).

Le procédé selon l'invention peut également comporter une étape 110 de détermination de la quantité de substance gazeuse adsorbable condensée dans les pores. Pour ce faire, l'indice du matériau poreux avec substance gazeuse adsorbable condensée à une longueur d'onde donnée est utilisé pour remonter à la quantité de substance gazeuse adsorbable qui s'est condensée dans les pores du matériau en fonction de la pression de substance gazeuse adsorbable dans la chambre grâce à une loi d'approximation de milieux effectifs ou EMA (« Effective Medium Approximation » en anglais) :

$$V_s(P_{rel}) = \frac{\dfrac{n^2(P_{rel})-1}{n^2(P_{rel})+2} - \dfrac{n_{vide}^2-1}{n_{vide}^2+2}}{\dfrac{n_s^2-1}{n_s^2+2}}$$

$$P_{rel} = P/P_s$$

avec :

- $V_s(P_{rel})$ : fraction volumique de substance gazeuse adsorbable condensée dans les pores
- P : Pression dans la chambre ;
- $P_s$ : Pression de vapeur saturante de substance gazeuse adsorbable ;
- $n(P_{rel})$ : Indice effectif du matériau constituant le réseau (poreux + substance gazeuse adsorbable condensée) à la pression relative $P_{rel}$ et à une longueur d'onde donnée (i.e. $n(\lambda, P_{rel})$ pour $\lambda$ donnée) ;
- $n_{vide}$ : Indice effectif du matériau constituant le réseau sous vide (éventuellement utilisé lors de la première mesure sous vide pour la détermination des dimensions des motifs) à la même longueur d'onde $\lambda$ donnée ;
- $n_s$ : Indice de la substance gazeuse adsorbable à la même longueur d'onde $\lambda$ donnée.

La figure 6 représente un exemple d'évolution en adsorption (courbe 114) et en désorption (115) de la fraction volumique de substance gazeuse adsorbable déterminée par le procédé selon l'invention en fonction de la pression relative. Cette fraction volumique est déterminée à partir de l'évolution de l'indice représenté en figure 5 et d'une loi EMA telle que décrite ci-dessus.

Une fois qu'on a atteint la pression de vapeur saturante de substance gazeuse adsorbable ($P_{rel}$ = 1), tous les pores ouverts sont remplis. En conséquence, la valeur de la fraction volumique de substance gazeuse adsorbable condensée à la pression de vapeur saturante $V_s(P_{rel} = 1)$ correspond au taux de porosité du matériau (c'est-à-dire le pourcentage de pores dans le matériau) ayant servi à la réalisation des motifs ; en l'espèce, dans le cas de la figure 6, le taux de porosité est égal à 28%.

La distribution en taille des pores peut également être calculée avec la loi de Kelvin donnant le rayon d'un pore cylindrique en fonction de la pression relative :

$$r = r_k + t$$

$$r_k = \frac{-2\gamma V_L \cos\theta}{RT \ln(P/P_S)}$$

avec :

- $r=r_k+t$ désignant le rayon du pore ;
- t désignant l'épaisseur de la monocouche adsorbée sur les parois du pore ;
- $V_L$ désignant le volume molaire de la substance gazeuse adsorbable ;
- $\gamma$ désignant la tension de surface de la substance gazeuse adsorbable ;
- R désignant la constante des gaz parfaits ;
- T désignant la température ;
- $\theta$ désignant l'angle de contact de la substance gazeuse adsorbable sur le matériau poreux (nul pour certaines substances gazeuses adsorbables).

La substance gazeuse adsorbable se condense dans les pores par capillarité. La loi de Kelvin prédit à quelle pression la substance gazeuse adsorbable va se condenser dans des pores d'un rayon donné. En d'autres termes, la substance gazeuse adsorbable, à une pression donnée, ne peut se condenser par capillarité que dans des pores ayant un rayon déterminé. Ceci explique par ailleurs pourquoi les pores de faible rayon sont remplis à plus faible pression, les pores de rayons plus élevés étant remplis ensuite à des pressions plus élevées. On peut donc, via la loi de Kelvin et la loi d'approximation de milieux effectifs ou EMA, déterminer la quantité de substance gazeuse adsorbable condensée dans les pores ayant un même rayon (correspondant à une pression donnée). On peut obtenir de la sorte la distribution en taille des pores ; la figure 7 représente un exemple de distribution en rayons (exprimés en nm) des pores de la structure analysée par le procédé selon l'invention. Cette distribution a sensiblement la forme d'une Gaussienne centrée sur un rayon environ égal à 1,5nm.

Les figures 8 et 9 illustrent une structure 21 à caractériser selon un second mode de réalisation du procédé selon l'invention utilisé dans ce cas pour la mesure de la vitesse de diffusion de la substance gazeuse adsorbable à travers un matériau poreux.

De façon identique au premier mode de réalisation, la structure 21 est éclairée par une onde lumineuse spéculaire 23 à une longueur d'onde donnée émise par une source lumineuse non représentée ; la lumière réfléchie 24 forme la réponse optique expérimentale de la structure 21 qu'il convient d'analyser. Il est entendu qu'il est possible de réaliser des mesures en utilisant des longueurs d'onde différentes pour l'onde incidente.

Grâce à la configuration du dispositif 6 tel que représenté en figure 1, il est possible d'injecter une substance gazeuse adsorbable dans la chambre 5 via les moyens d'alimentation 9 et la vanne de réglage 10 et de faire varier la pression dans la chambre 5 via la pompe 7 et la vanne de réglage 8.

La structure 21 comporte une pluralité de motifs 22 identiques ou sensiblement identiques et disposés périodiquement. Ces motifs 22 sont préférentiellement des lignes parallèles espacées et formées sur un substrat 29.

Chaque motif 22 comporte une couche supérieure 25 non poreuse déposée sur la surface d'une couche poreuse 26 à étudier. L'épaisseur de la couche supérieure 25 est de préférence adaptée pour être transparente aux longueurs d'onde utilisées pour la mesure de scattérométrie de manière à pouvoir sonder le matériau poreux sous la couche (par exemple dans le cas d'un empilement avec un couche de masque dur métallique, l'épaisseur du métal doit être suffisamment fine : typiquement inférieure à 25nm pour le TiN).

Pendant la mesure optique, lors de l'étape d'adsorption, la substance gazeuse adsorbable se condense dans les pores ouverts sur les flancs de la couche poreuse 26. Si le motif 22 est suffisamment large, la condensation n'intervient que sur les bords du motif dans un premier temps puis la substance gazeuse adsorbable va diffuser des bords vers le centre du motif 22 plus ou moins rapidement selon les propriétés du matériau poreux.

Un exemple de modèle scatterométrique utilisable pour la mise en oeuvre du procédé selon l'invention est donné sur la figure 9. On modélise le motif 22 avec plusieurs zones d'indices différents : un indice $n_1$ pour la partie centrale 27 en matériau poreux vide, un indice $n_2$ sur les flancs 28 représentant le matériau poreux rempli de substance gazeuse adsorbable, un indice $n_3$ pour la couche 25 non poreuse en surface et un indice $n_4$ pour le substrat 29. Ainsi lors de la diffusion de la substance gazeuse adsorbable, l'épaisseur $e_2$ (épaisseur des flancs 28) de la zone remplie de substance gazeuse adsorbable va progressivement augmenter au profit de l'épaisseur $e_1$ de la partie centrale 27 qui va donc diminuer. Les hauteurs des couches de surface et poreuse sont respectivement $h_3$ et $h_1$.

Les étapes du second mode de réalisation du procédé 200 selon l'invention applicable à la structure de la figure 8 sont illustrées en référence à la figure 10.

La première étape 201 du procédé 200 selon l'invention consiste à déterminer au moins une partie des dimensions (typiquement la hauteur h totale, les hauteurs $h_1$ et $h_3$ et la largeur l) des motifs 22. Cette détermination peut par exemple être obtenue par une mesure par microscopie électronique à balayage MEB ou par microscopie à force atomique en trois dimensions AFM-3D. Il est également possible de réaliser une première acquisition scatterométrique de la réponse optique expérimentale de la structure 21 de diffraction placée dans la chambre 5 sous vide résiduel.

Une séquence d'adsorption de substance gazeuse adsorbable est ensuite réalisée sur la structure 21 à une pression relative $P_{rel}$ de substance gazeuse adsorbable dans la chambre 5 suffisamment élevée pour permettre, en laissant la diffusion de la substance gazeuse adsorbable se faire, le remplissage de l'ensemble des pores ouverts des motifs 22. Plusieurs acquisitions 202 optique scatterométrique sont réalisées sur le réseau poreux pour suivre dans le temps la diffusion de la substance gazeuse adsorbable dans les couches poreuses 26. Contrairement au premier mode de réalisation du procédé, on va suivre ici l'évolution des signatures optiques de la structure 21 en fonction du temps de progression du front de substance gazeuse adsorbable à travers le matériau poreux et non de la pression relative dans la chambre

Pour chaque mesure 202 de scattérométrie porosimétrique, l'indice effectif $n_2$ des flancs 26 poreux change en fonction de la quantité de substance gazeuse adsorbable condensée dans les pores et le paramètre géométrique formé par l'épaisseur $e_2$ augmente.

Le procédé 200 selon l'invention comporte en outre, pour chaque temps de mesure, une étape 207 de détermination de la réponse optique théorique de la structure 21 en utilisant une méthode 206 de simulation. Une modélisation des motifs pour l'obtention de la signature théorique peut être par exemple obtenue par une méthode d'analyse rigoureuse des ondes couplées dite méthode RCWA (« Rigorous Coupled Wave Analysis » en anglais).

Pour la mise en oeuvre de l'étape de simulation 206, une modélisation de l'indice optique $n_2$ des flancs 26 poreux à chaque étape de mesure (c'est à dire pour chaque temps de mesure) est également nécessaire. On utilise donc une loi de dispersion (du type loi de Cauchy) représentant l'indice optique dont les paramètres sont ajustés à chaque étape.

Le procédé 200 selon l'invention comporte par ailleurs une étape 208 de minimisation de l'écart entre la réponse expérimentale 205 et la réponse théorique 207. Cette minimisation (par exemple à l'aide de la méthode des bibliothèques) est rendue possible en ajustant (étape 209) les parties réelle et imaginaire de l'indice optique $n_2$ ainsi que l'épaisseur $e_2$ de façon à rendre l'écart entre la réponse expérimentale 205 et la réponse théorique 207 inférieur ou égal à un seuil donné. On constate qu'à la différence du procédé selon le premier mode de réalisation dans lequel les dimensions étaient toutes déterminées lors de la première étape, on laisse ici libre un paramètre géométrique (en l'espèce l'épaisseur $e_2$) que l'on va ajuster.

Grâce au procédé 200 selon l'invention, on estime l'épaisseur $e_2$ en fonction du temps et on peut ainsi remonter au coefficient de diffusion de la substance gazeuse adsorbable dans le matériau poreux.

Les figures 11 et 12 illustrent une structure 31 à caractériser selon un troisième mode de réalisation du procédé selon l'invention utilisé dans ce cas pour la mesure de la perméabilité de substance gazeuse adsorbable à travers un matériau.

De façon identique au premier mode de réalisation, la structure 31 est éclairée par une onde lumineuse spéculaire 33 à une longueur d'onde donnée émise par une source lumineuse non représentée ; la lumière réfléchie 34 forme la réponse optique expérimentale de la structure 31 qu'il convient d'analyser. Il est entendu qu'il est possible de réaliser des mesures en utilisant des longueurs d'onde différentes pour l'onde incidente.

Grâce à la configuration du dispositif 6 tel que représenté en figure 1, il est possible d'injecter une substance gazeuse adsorbable dans la chambre 5 via les moyens d'alimentation 9 et la vanne de réglage 10 et de faire varier la pression dans la chambre 5 via la pompe 7 et la vanne de réglage 8.

La structure 31 comporte une pluralité de motifs 32 identiques ou sensiblement identiques et disposés périodiquement. Ces motifs 32 sont préférentiellement des lignes parallèles espacées et formées sur un substrat 39.

Une couche 35 réalisée dans le matériau à étudier formant une membrane perméable est déposée sur les motifs 32 fabriqués avec un matériau poreux capable d'adsorber une substance gazeuse adsorbable. La couche 35 à étudier est de préférence transparente aux longueurs d'onde utilisées pour la mesure de scattérométrie de manière à pouvoir sonder le matériau poreux des motifs 32 sous la couche 35. Pendant la mesure optique, lors de l'étape d'adsorption, la substance gazeuse adsorbable pénètre plus ou moins rapidement à travers la membrane 35 et vient se condenser dans les pores ouverts sur les flancs des motifs poreux 32 qui font office de réceptacles à substance gazeuse adsorbable. Selon les propriétés de la membrane (plus ou moins perméable) la condensation n'intervient que sur les bords 36 du motif 32 dans un premier temps puis la substance gazeuse adsorbable va diffuser des bords 36 vers le centre 37 du motif plus ou moins rapidement.

Un exemple de modèle scatterométrique utilisable pour la mise en oeuvre du procédé selon l'invention est donné sur la figure 12. On modélise le motif 32 et la membrane 35 avec plusieurs zones d'indice différents : un indice $n_1$ pour le centre 37 du motif 32 en matériau poreux vide de substance gazeuse adsorbable, un indice $n_2$ sur les flancs 36 du motif 32 représentant le matériau poreux rempli de substance gazeuse adsorbable, un indice $n_3$ pour la membrane 35 et un indice $n_4$ pour le substrat 39. Les hauteurs de la membrane 35 et de la couche poreuse 32 sont respectivement $h_3$ et $h_2$. Ainsi, lors de la perméation, l'épaisseur $e_2$ de la zone 36 remplie de substance gazeuse adsorbable va progressivement augmenter tandis que l'épaisseur $e_1$ et la hauteur $h_1$ de la zone centrale 37 vont diminuer.

Le procédé selon ce troisième mode de réalisation est proche du procédé 200 décrit en référence à la figure 10. La différence réside dans le fait que l'on ne cherche pas à caractériser le matériau poreux mais la perméabilité de la membrane située au-dessus du matériau poreux, ce dernier servant de lieu de stockage pour la substance gazeuse adsorbable. Grâce au procédé selon ce troisième mode de réalisation, on estime l'épaisseur $e_2$ et la hauteur $h_1$ en fonction du temps et on peut ainsi remonter à la perméabilité de la membrane 35 à la substance gazeuse adsorbable.

Les figures 13 et 14 illustrent une structure 41 à caractériser selon un quatrième mode de réalisation du procédé selon l'invention utilisé dans ce cas pour la mesure de l'endommagement d'un matériau poreux lors de son intégration sur un circuit microélectronique (en particulier lors des étapes de gravure, de décapage « stripping » ou de nettoyage).

De façon identique au premier mode de réalisation, la structure 41 est éclairée par une onde lumineuse spéculaire 43 à une longueur d'onde donnée émise par une source lumineuse non représentée ; la lumière réfléchie 44 forme la réponse optique expérimentale de la structure 41 qu'il convient d'analyser. Il est entendu qu'il est possible de réaliser des mesures en utilisant des longueurs d'onde différentes pour l'onde incidente.

Grâce à la configuration du dispositif 6 tel que représenté en figure 1, il est possible d'injecter une substance gazeuse adsorbable dans la chambre 5 via les moyens d'alimentation 9 et la vanne de réglage 10 et de faire varier la pression dans la chambre 5 via la pompe 7 et la vanne de réglage 8.

La structure 41 comporte une pluralité de motifs 42 identiques ou sensiblement identiques et disposés périodiquement. Ces motifs 42 sont préférentiellement des lignes parallèles espacées et formées sur un substrat 49.

Chaque motif 42 comporte une couche supérieure 45 non poreuse déposée sur la surface d'une couche poreuse 46 à étudier. L'épaisseur de la couche supérieure 45 est de préférence adaptée pour être transparente aux longueurs d'onde utilisées pour la mesure de scattérométrie de manière à pouvoir sonder le matériau poreux sous la couche. Le matériau poreux de la couche poreuse 46 est ensuite soumis aux procédés dédiés à son intégration (typiquement des procédés de lithographie, gravure, stripping, nettoyage...). Lors des ces étapes une couche modifiée (endommagée) du matériau poreux peut se former sur les parties des motifs qui ne sont pas protégées lors des étapes précédemment citées (par exemple sur les flancs 48 des motifs 42 qui ne sont pas masqués par un autre matériau). Les propriétés de mouillabilité du matériau endommagé sont alors différentes que celles du matériau poreux initial.

Un exemple de modèle scatterométrique utilisable pour la mise en oeuvre du procédé selon l'invention est donné sur la figure 14. On modélise le motif 42 avec plusieurs zones d'indices différents : un indice $n_1$ pour la zone centrale en matériau poreux vide, un indice $n_2$ sur les flancs 48 du motif 42 représentant le matériau poreux endommagé, un indice $n_3$ pour la couche 45 non poreuse en surface et un indice $n_4$ pour le substrat 49.

Pendant la mesure optique, lors de l'étape d'adsorption, on va utiliser en tant que substance gazeuse adsorbable une vapeur de solvant polaire comme l'eau qui sera amené à se condenser uniquement dans les flancs 48 endommagés (zone hydrophile) des motifs 42 et pas dans la zone centrale 47 non modifiée (zone hydrophobe). Afin d'améliorer la précision des résultats, il est avantageux de diminuer la largeur des lignes formant les motifs 42 afin que la zone modifiée 48 du matériau soit significative vis-à-vis de la zone non modifiée 47.

Ainsi lors de l'adsorption, seule la zone endommagée 48 se remplit de solvant polaire et le paramètre géométrique $e_2$ (épaisseur de la zone endommagée 48) donne la taille de la zone endommagée. Les hauteurs des couches de surface 45 et poreuse 46 sont $h_3$ et $h_1$.

Le procédé selon ce quatrième mode de réalisation de l'invention est assez proche du procédé selon le premier mode de réalisation illustré en figure 4.

Ainsi, la première étape du procédé selon le quatrième mode consiste à déterminer au moins une partie des dimensions des motifs 32 (typiquement la hauteur et la largeur h et l des motifs ainsi que les hauteurs des couches de surface 45 et poreuse 46 $h_3$ et $h_1$).

Une séquence d'adsorption (et éventuellement de désorption) de solvant polaire est réalisée sur la structure 31 tandis qu'une acquisition optique scatterométrique est réalisée parallèlement sur le réseau poreux pour chaque pression du solvant polaire dans la chambre 5. On obtient donc une réponse optique expérimentale en fonction de la longueur d'onde pour chaque pression relative $P_{rel}$ du solvant polaire dans la chambre 5.

Le procédé selon ce quatrième mode de réalisation comporte en outre, pour chaque pression relative $P_{rel}$, une étape de détermination de la réponse optique théorique de la structure 31 en utilisant une méthode de simulation. Une modélisation des motifs pour l'obtention de la signature théorique peut être par exemple obtenue par une méthode d'analyse rigoureuse des ondes couplées dite méthode RCWA.

Pour la mise en oeuvre de l'étape de simulation, une modélisation de l'indice optique $n_2$ des flancs 36 à chaque étape de mesure (c'est à dire pour chaque pression relative) est également nécessaire. On utilise donc une loi de dispersion (du type loi de Cauchy) représentant l'indice optique dont les paramètres sont ajustés à chaque étape.

Le procédé selon le quatrième mode de réalisation de l'invention comporte par ailleurs une étape de minimisation de l'écart entre la réponse expérimentale et la réponse théorique. Cette minimisation est rendue possible en ajustant les parties réelle et imaginaire de l'indice optique $n_2$ ainsi que l'épaisseur $e_2$ de façon à rendre l'écart entre la réponse expérimentale et la réponse théorique inférieur ou égal à un seuil donné. On constate qu'à la différence du procédé selon le premier mode de réalisation dans lequel les dimensions étaient toutes déterminées lors de la première étape, on laisse ici libre un paramètre géométrique (en l'espèce l'épaisseur $e_2$) que l'on va ajuster. Ainsi le procédé selon ce quatrième mode de réalisation pratiquée sur la structure 41 permet par modélisation de remonter à l'épaisseur $e_2$ de matériau poreux endommagé.

De façon générale, on constate donc le principe de l'invention repose sur le fait de faire de la porosimétrie directement sur des motifs périodiques en utilisant la scattérométrie pour analyser leur signature optique et d'adapter l'analyse de scattérométrie à la problématique de la porosimétrie en ajustant non plus les dimensions des motifs mais leur indice à chaque étape de la mesure (les différentes mesures pouvant être faites en faisant varier la pression relative de la substance gazeuse adsorbable utilisée ou en fonction du temps de diffusion de la substance gazeuse adsorbable à l'intérieur du motif).

Bien entendu, l'invention n'est pas limitée aux modes de réalisation qui viennent d'être décrits.

Notamment, même si l'invention a été plus spécifiquement décrite dans le cas d'une approche utilisant la scattérométrie ellipsométrique (i.e. utilisant le changement de polarisation de la lumière) spectroscopique (i.e. dans laquelle on fait varier la longueur d'onde de la lumière incidente), l'invention s'applique à tout type de méthode scatterométrique telle l'ellipsométrie à angle variable (dite aussi goniométrique ou θ-2θ) ou la réflectométrie (spectroscopique ou goniométrique).

## Revendications

1. Procédé (100, 200) de caractérisation optique de structures élémentaires répétées de façon régulière afin de former une structure (1, 21, 31, 41) de diffraction, chaque structure élémentaire comportant au moins un motif géométrique (2, 22, 32, 42), chacun desdits motifs (2, 22, 32, 42) étant réalisé au moins partiellement à l'aide d'un matériau poreux, ledit procédé comportant les étapes de :

   - détermination (101, 201) de paramètres géométriques desdits motifs (2, 22, 32, 42) ;
   - acquisition (102, 202) scatterométrique de la réponse optique expérimentale (105, 205) de ladite structure (1, 21, 31, 41) de diffraction placée dans une chambre (5) à une pression donnée, la présence d'une substance gazeuse adsorbable dans ladite chambre (5) entraînant la condensation de ladite substance gazeuse adsorbable dans au moins une partie des pores ouverts des motifs de la structure (1, 21,31,41);
   - détermination (106, 206) de la réponse optique théorique (107, 207) de ladite structure (1, 21, 31, 41) de diffraction à partir des paramètres géométriques déterminés et en ajustant l'indice optique du matériau de la zone de chacun desdits motifs (2, 22, 32, 42) dans laquelle s'est condensée la substance gazeuse adsorbable de façon à rendre l'écart entre ladite réponse expérimentale (105, 205) et ladite réponse théorique (107, 207) inférieur ou égal à un seuil donné.

2. Procédé (100, 200) selon la revendication précédente **caractérisé en ce que** la taille de ladite structure (1, 21, 31, 41) de diffraction est supérieure à la taille du spot optique utilisé pour la mesure scatterométrique.

3. Procédé (100, 200) selon l'une des revendications précédentes **caractérisé en ce que** l'étape de détermination de paramètres géométriques desdits motifs comporte une étape d'acquisition scatterométrique de la réponse optique expérimentale de ladite structure de diffraction placée dans la chambre sous vide et une étape détermination de la réponse optique théorique de ladite structure de diffraction à partir des indices optiques des motifs sous vide et en ajustant les dimensions desdits motifs de façon à rendre l'écart entre ladite réponse expérimentale et ladite réponse théorique inférieur ou égal à un seuil donné.

4. Procédé (100, 200) selon l'une des revendications précédentes **caractérisé en ce que** l'étape de détermination de paramètres géométriques desdits motifs comporte une étape (101, 201) de mesure par microscopie électronique à balayage et/ou par microscopie à force atomique en trois dimensions.

5. Procédé (100) selon l'une des revendications précédentes **caractérisé en ce qu'**il comporte une pluralité d'étapes d'acquisition scatterométrique (102) à des pressions données différentes, chaque étape d'acquisition étant suivie d'une étape de détermination de la réponse optique théorique de la structure (1, 41) de diffraction par ajustement d'indice optique.

6. Procédé (100) selon la revendication 5 **caractérisé en ce qu'**il comporte une étape de détermination dudit indice optique ajusté en fonction de la pression sur toute la gamme de longueurs d'onde utilisées pour les étapes d'acquisition scatterométrique.

7. Procédé (100) selon l'une des revendications 5 ou 6 **caractérisé en ce que** ladite pluralité d'étapes d'acquisition scatterométrique à des pressions données différentes se fait selon une variation croissante de la pression correspondant à une adsorption progressive de ladite substance gazeuse adsorbable dans les pores ouverts desdits motifs (2, 42) et/ou selon une variation décroissante de la pression correspondant à une désorption progressive de ladite substance gazeuse adsorbable dans les pores ouverts desdits motifs (2, 42).

8. Procédé (100) selon la revendication précédente **caractérisé en ce que** la pression varie d'une pression de vide résiduel jusqu'à la pression de vapeur saturante de ladite substance gazeuse adsorbable et/ou de la pression de vapeur saturante de ladite substance gazeuse adsorbable jusqu'à une pression de vide résiduelle.

**9.** Procédé (100) selon l'une des revendications précédentes **caractérisé en ce que** l'indice optique du matériau ajusté à une pression donnée est utilisé pour déterminer la quantité de substance gazeuse adsorbable qui s'est condensée dans les pores ouverts.

**10.** Procédé (100) selon la revendication précédente **caractérisé en ce que** la détermination de la quantité de substance gazeuse adsorbable condensée se fait en déterminant la fraction volumique de substance gazeuse adsorbable condensée dans les pores ouverts via une loi d'approximation de milieux effectifs EMA.

**11.** Procédé (100) selon la revendication 10 **caractérisé en ce qu'**il comporte une étape de détermination de la distribution en taille des pores ouverts.

**12.** Procédé (100) selon l'une des revendications 9 à 11 **caractérisé en ce que** la valeur de taux de porosité ouverte dudit matériau poreux formant au moins partiellement lesdits motifs est obtenu via l'ajustement de l'indice optique à la pression de vapeur saturante de ladite substance gazeuse adsorbable.

**13.** Procédé selon l'une des revendications précédentes **caractérisé en ce que** chacun desdits motifs (42) comporte une première couche supérieure (45) réalisée dans un matériau non poreux déposée sur la surface d'une seconde couche (46) comportant au moins une partie (47) dans un matériau non susceptible d'adsorber la substance gazeuse adsorbable utilisée lorsque cette dernière est maintenue sous pression à son contact et au moins une partie (48), telle que l'un de ses flancs, dans un matériau poreux, l'écart entre ladite réponse expérimentale à une pression donnée et ladite réponse théorique étant rendu inférieur ou égal à un seuil donné en ajustant :

- l'indice optique du matériau de la zone de ladite partie poreuse dans laquelle s'est condensée la substance gazeuse adsorbable et ;
- un paramètre géométrique représentatif de la taille de la zone de ladite partie poreuse dans laquelle s'est condensée la substance gazeuse adsorbable ;

ledit procédé comportant une pluralité d'étapes d'acquisition scatterométrique à des pressions données différentes, chaque étape d'acquisition étant suivie d'une étape de détermination de la réponse optique théorique de la structure de diffraction par ajustement dudit indice optique et dudit paramètre géométrique.

**14.** Procédé (200) selon l'une des revendications 1 à 4 **caractérisé en ce que** chacun desdits motifs (22) comporte une première couche (25) supérieure réalisée dans un matériau non poreux déposée sur la surface d'une seconde couche (26) réalisée dans un matériau poreux, l'écart entre ladite réponse expérimentale à une pression donnée et ladite réponse théorique étant rendu inférieur ou égal à un seuil donné en ajustant :

- l'indice optique du matériau de la zone de ladite seconde couche dans laquelle s'est condensée la substance gazeuse adsorbable et ;
- un paramètre géométrique représentatif de la taille de la zone de ladite seconde couche poreuse dans laquelle s'est condensée la substance gazeuse adsorbable ;

ledit procédé comportant une pluralité d'étapes d'acquisition scatterométrique en fonction du temps de diffusion de ladite substance gazeuse adsorbable à l'intérieur de ladite seconde couche à partir des flancs de celle-ci, chaque étape d'acquisition étant suivie d'une étape de détermination de la réponse optique théorique de la structure de diffraction par ajustement dudit indice optique et dudit paramètre géométrique.

**15.** Procédé selon l'une des revendications 1 à 4 **caractérisé en ce qu'**une couche supérieure (35) réalisée dans un matériau perméable à caractériser est déposée sur la surface supérieure des motifs (32) réalisés dans un matériau poreux, l'écart entre ladite réponse expérimentale à une pression donnée et ladite réponse théorique étant rendu inférieur ou égal à un seuil donné en ajustant :

- l'indice optique du matériau de la zone desdits motif poreux dans laquelle s'est condensée la substance gazeuse adsorbable et ;
- un paramètre géométrique représentatif de la taille de la zone desdits motifs poreux dans laquelle s'est condensée la substance gazeuse adsorbable ;

ledit procédé comportant une pluralité d'étapes d'acquisition scatterométrique en fonction du temps de diffusion de ladite substance gazeuse adsorbable à l'intérieur desdits motifs à partir des flancs de ceux-ci, chaque étape d'acquisition étant suivie d'une étape de détermination de la réponse optique théorique de la structure de diffraction par ajustement dudit indice optique et dudit paramètre géométrique.

## Claims

1. A method (100, 200) for the optical characterization of elementary structures repeated regularly so as to form a diffraction structure (1, 21, 31, 41), each elementary structure comprising at least one geometric pattern (2, 22, 32, 42), each of said patterns (2, 22, 32, 42) being at least partially produced by using a porous material, said method comprising the steps of:

    - determining (101, 201) the geometric parameters of said patterns (2, 22, 32, 42);
    - performing (102, 202) a scatterometric acquisition of the experimental optical response (105, 205) of said diffraction structure (1, 21, 31, 41) placed in a chamber (5) at a given pressure, the presence of an adsorbable gaseous substance in said chamber (5) leading to condensation of said adsorbable gaseous substance in at least one part of the open pores of the patterns of the structure (1, 21, 31, 41);
    - determining (106, 206) a theoretical optical response (107, 207) of said diffraction structure (1, 21, 31, 41) from the determined geometric parameters and by adjusting the optical index of the material of the area of each of said patterns (2, 22, 32, 42) in which the adsorbable gaseous substance has condensed so as to make the discrepancy between said experimental response (105, 205) and said theoretical response (107, 207) less than or equal to a given threshold.

2. The method (100, 200) according to the previous claim **characterized in that** the size of said diffraction structure (1, 21, 31, 41) is greater than the size of the optical spot used for the scatterometric measurement.

3. The method (100, 200) according to one of the previous claims **characterized in that** the step of determining the geometric parameters of said patterns comprises a step of performing a scatterometric acquisition of the experimental optical response of said diffraction structure placed in the vacuum chamber and a step of determining the theoretical optical response of said diffraction structure from the optical indexes of the patterns in a vacuum and by adjusting the dimensions of said patterns so as to make the discrepancy between said experimental response and said theoretical response less than or equal to a given threshold.

4. The method (100, 200) according to one of the previous claims **characterized in that** the step of determining the geometric parameters of said patterns comprises a step (101, 201) of measuring by scanning electron microscopy and/or by atomic force microscopy in three dimensions.

5. The method (100) according to one of the previous claims **characterized in that** the method comprises a plurality of scatterometric acquisition steps (102) at different given pressures, each acquisition step being followed by a step of determining the theoretical optical response of the diffraction structure (1, 41) by adjusting the optical index.

6. The method (100) according to claim 5 **characterized in that** the method comprises a step of determining said optical index adjusted according to the pressure over the entire range of wavelengths utilized for the scatterometric acquisition steps.

7. The method (100) according to one of claims 5 or 6 **characterized in that** said plurality of scatterometric acquisition steps at different given pressures is carried out according to an increasing variation in pressure corresponding to the progressive adsorption of said adsorbable gaseous substance in the open pores of said patterns (2, 42) and/or according to a decreasing variation of the pressure corresponding to a progressive desorption of said adsorbable gaseous substance in the open pores of said patterns (2, 42).

8. The method (100) according to the previous claim **characterized in that** the pressure varies from a residual vacuum pressure to a saturation vapor pressure of said adsorbable gaseous substance and/or from the saturation vapor pressure of said adsorbable gaseous substance to a residual vacuum pressure.

9. The method (100) according to one of the previous claims **characterized in that** the optical index of the adjusted material at a given pressure is utilized to determine the quantity of adsorbable gaseous substance that has condensed in the open pores.

10. The method (100) according to the previous claim **characterized in that** the determination of the quantity of adsorbable gaseous substance condensed is done by determining the volume fraction of the adsorbable gaseous substance condensed in the open pores via a law of effective medium approximation (EMA).

11. The method (100) according to claim 10 **characterized in that** the method comprises a step of determining the size distribution of the open pores.

12. The method (100) according to one of claims 9 to 11 **characterized in that** the value of the rate of open porosity of said porous material forming at least partially said patterns is obtained via adjusting the optical index to the saturation vapor pressure of said adsorbable gaseous substance.

**13.** The method according to one of the previous claims **characterized in that** each of said patterns (42) comprises a first upper layer (45) made of a nonporous material deposited on the surface of a second layer (46) comprising at least one part (47) in a material not capable of adsorbing the adsorbable gaseous substance utilized when the latter is maintained under pressure in contact with the material and at least one part (48), such as one of its sidewalls, in a porous material, the discrepancy between said experimental response at a given pressure and said theoretical response being made less than or equal to a given threshold by adjusting:

- the optical index of the material of the area of said porous part in which the adsorbable gaseous substance has condensed and;
- a geometric parameter representative of the size of the area of said porous part in which the adsorbable gaseous substance has condensed;

Said method comprising a plurality of scatterometric acquisition steps at different given pressures, each acquisition step being followed by a step of determining the theoretical optical response of the diffraction structure by adjusting said optical index and said geometric parameter.

**14.** The method (200) according to one of claims 1 to 4 **characterized in that** each of said patterns (22) comprises a first upper layer (25) made in a nonporous material deposited on the surface of a second layer (26) made in a porous material, the discrepancy between said experimental response at a given pressure and said theoretical response being made less than or equal to a given threshold by adjusting:

- the optical index of the material of the area of said second layer in which the adsorbable gaseous substance has condensed and;
- a geometric parameter representative of the size of the area of said second porous layer in which the adsorbable gaseous substance has condensed; Said method comprising a plurality of scatterometric acquisition steps according to the diffusion time of said adsorbable gaseous substance inside said second layer from the sidewalls of the latter, each acquisition step being followed by a step of determining the theoretical optical response of the diffraction structure by adjusting said optical index and said geometric parameter.

**15.** The method according to one of claims 1 to 4 **characterized in that** an upper layer (35) made in a permeable material to be **characterized** is deposited on the upper surface of patterns (32) made in a porous material, the discrepancy between said experimental response at a given pressure and said theoretical response being made less than or equal to a given threshold by adjusting:

- the optical index of the material of the area of said porous patterns in which the adsorbable gaseous substance has condensed and;
- a geometric parameter representative of the size of the area of said porous patterns in which the adsorbable gaseous substance has condensed;

Said method comprising a plurality of scatterometric acquisition steps according to the diffusion time of said adsorbable gaseous substance inside said patterns from the sidewalls of the latter, each acquisition step being followed by a step of determining the theoretical optical response of the diffraction structure by adjusting said optical index and said geometric parameter.

**Patentansprüche**

**1.** Verfahren (100, 200) zur optischen Charakterisierung elementarer Strukturen, die sich regelmäßig wiederholen, so dass sie eine Beugungsstruktur (1, 21, 31, 41) bilden, wobei jede elementare Struktur mindestens ein geometrisches Motiv (2, 22, 32, 42) aufweist, wobei jedes der Motive (2, 22, 32, 42) wenigstens teilweise mit Hilfe eines porösen Materials ausgebildet ist, wobei das Verfahren die folgenden Schritte aufweist:

- Bestimmung (101, 201) geometrischer Parameter der Motive (2, 22, 32, 42);
- scatterometrische Erfassung (102, 202) der experimentellen optischen Reaktion (105, 205) der in einer Kammer (5) bei einem gegebenen Druck angeordneten Beugungsstruktur (1, 21, 31, 41), wobei die Gegenwart eines adsorbierbaren gasförmigen Stoffes in der Kammer (5) die Kondensation dieses adsorbierbaren gasförmigen Stoffes in wenigstens einem Teil der offenen Poren der Motive der Struktur (1, 21, 31, 41) zur Folge hat;
- Bestimmung (106, 206) der theoretischen optischen Reaktion (107, 207) der Beugungsstruktur (1, 21, 31, 41) ausgehend von den bestimmten geometrischen Parametern und durch Anpassen des Brechungsindex des Materials des Bereiches jedes der Motive (2, 22, 32, 42), in welchem der adsorbierbare gasförmige Stoff kondensiert ist, derart, dass die Abweichung zwischen der experimentellen Reaktion (105, 205) und der theoretischen Reaktion (107, 207) kleiner als ein oder gleich einem gegebenen Schwellenwert gemacht wird.

**2.** Verfahren (100, 200) nach dem vorhergehenden Anspruch, **dadurch gekennzeichnet, dass** die Größe der Beugungsstruktur (1, 21, 31, 41) größer als die Größe des optischen Flecks ist, der für die scatterometrische Messung verwendet wird.

**3.** Verfahren (100, 200) nach einem der vorhergehenden Ansprüche, **dadurch gekennzeichnet, dass** der Schritt der Bestimmung von geometrischen Parametern der Motive einen Schritt der scatterometrischen Erfassung der experimentellen optischen Reaktion der in der Kammer unter Vakuum angeordneten Beugungsstruktur und einen Schritt der Bestimmung der theoretischen optischen Reaktion der Beugungsstruktur ausgehend von den Brechungsindizes der Motive unter Vakuum und durch Anpassen der Abmessungen der Motive, derart, dass die Abweichung zwischen der experimentellen Reaktion und der theoretischen Reaktion kleiner als ein oder gleich einem gegebenen Schwellenwert gemacht wird, umfasst.

**4.** Verfahren (100, 200) nach einem der vorhergehenden Ansprüche, **dadurch gekennzeichnet, dass** der Schritt der Bestimmung von geometrischen Parametern der Motive einen Schritt (101, 201) der Messung durch Rasterelektronenmikroskopie und/ oder durch Rasterkraftmikroskopie in drei Dimensionen umfasst.

**5.** Verfahren (100) nach einem der vorhergehenden Ansprüche, **dadurch gekennzeichnet, dass** es mehrere Schritte der scatterometrischen Erfassung (102) bei unterschiedlichen gegebenen Drücken aufweist, wobei auf jeden Erfassungsschritt ein Schritt der Bestimmung der theoretischen optischen Reaktion der Beugungsstruktur (1, 41) durch Anpassung des Brechungsindex folgt.

**6.** Verfahren (100) nach Anspruch 5, **dadurch gekennzeichnet, dass** es einen Schritt der Bestimmung des in Abhängigkeit vom Druck angepassten Brechungsindex auf dem gesamten Bereich von Wellenlängen, die für die Schritte der scatterometrischen Erfassung verwendet werden, aufweist.

**7.** Verfahren (100) nach einem der Ansprüche 5 oder 6, **dadurch gekennzeichnet, dass** die mehreren Schritte der scatterometrischen Erfassung bei unterschiedlichen gegebenen Drücken mit einer schrittweisen Erhöhung des Druckes, die einer zunehmenden Adsorption des adsorbierbaren gasförmigen Stoffes in den offenen Poren der Motive (2, 42) entspricht, und/oder mit einer schrittweisen Verringerung des Druckes, die einer zunehmenden Desorption des adsorbierbaren gasförmigen Stoffes in den offenen Poren der Motive (2, 42) entspricht, durchgeführt werden.

**8.** Verfahren (100) nach dem vorhergehenden Anspruch, **dadurch gekennzeichnet, dass** der Druck von einem Restvakuumdruck bis zu einem Sättigungsdampfdruck des adsorbierbaren gasförmigen Stoffes und/oder von dem Sättigungsdampfdruck des adsorbierbaren gasförmigen Stoffes bis zu einem Restvakuumdruck variiert.

**9.** Verfahren (100) nach einem der vorhergehenden Ansprüche, **dadurch gekennzeichnet, dass** der an einen gegebenen Druck angepasste Brechungsindex des Materials verwendet wird, um die Menge des adsorbierbaren gasförmigen Stoffes zu bestimmen, die in den offenen Poren kondensiert ist.

**10.** Verfahren (100) nach dem vorhergehenden Anspruch, **dadurch gekennzeichnet, dass** die Bestimmung der Menge des kondensierten adsorbierbaren gasförmigen Stoffes durchgeführt wird, indem der Volumenanteil an kondensiertem adsorbierbarem gasförmigem Stoff in den offenen Poren mit Hilfe eines Modells der Effective Medium Approximation (EMA) bestimmt wird.

**11.** Verfahren (100) nach Anspruch 10, **dadurch gekennzeichnet, dass** es einen Schritt der Bestimmung der Größenverteilung der offenen Poren aufweist.

**12.** Verfahren (100) nach einem der Ansprüche 9 bis 11, **dadurch gekennzeichnet, dass** der Wert des Anteils offener Porosität des porösen Materials, das wenigstens teilweise die Motive bildet, durch die Anpassung des Brechungsindex an den Sättigungsdampfdruck des adsorbierbaren gasförmigen Stoffes erhalten wird.

**13.** Verfahren (100) nach einem der vorhergehenden Ansprüche, **dadurch gekennzeichnet, dass** jedes der Motive (42) eine erste, aus einem nicht porösen Material ausgebildete obere Schicht (45) aufweist, die auf die Oberfläche einer zweiten Schicht (46) aufgebracht ist, die wenigstens einen Teil (47) aus einem Material, das nicht in der Lage ist, den verwendeten adsorbierbaren gasförmigen Stoff zu adsorbieren, wenn dieser Letztere unter Druck in Kontakt mit ihm gehalten wird, und wenigstens einen Teil (48), wie etwa eine ihrer Flanken, aus einem porösen Material aufweist, wobei die Abweichung zwischen der experimentellen Reaktion bei einem gegebenen Druck und der theoretischen Reaktion kleiner als ein oder gleich einem gegebenen Schwellenwert gemacht wird, indem angepasst werden:

- der Brechungsindex des Materials des Bereiches des porösen Teils, in welchem der adsorbierbare gasförmige Stoff kondensiert ist; und
- ein geometrischer Parameter, der für die Größe des Bereiches des porösen Teils, in welchem der adsorbierbare gasförmige Stoff kondensiert ist, repräsentativ ist;

wobei das Verfahren mehrere Schritte der scatterometrischen Erfassung bei unterschiedlichen gegebenen Drücken aufweist, wobei auf jeden Erfassungsschritt ein Schritt der Bestimmung der theoretischen optischen Reaktion der Beugungsstruktur durch Anpassung des Brechungsindex und des geometrischen Parameters folgt.

**14.** Verfahren (200) nach einem der Ansprüche 1 bis 4, **dadurch gekennzeichnet, dass** jedes der Motive (22) eine erste, aus einem nicht porösen Material ausgebildete obere Schicht (25) aufweist, die auf die Oberfläche einer zweiten, aus einem porösen Material ausgebildeten Schicht (26) aufgebracht ist, wobei die Abweichung zwischen der experimentellen Reaktion bei einem gegebenen Druck und der theoretischen Reaktion kleiner als ein oder gleich einem gegebenen Schwellenwert gemacht wird, indem angepasst werden:

- der Brechungsindex des Materials des Bereiches der zweiten Schicht, in welchem der adsorbierbare gasförmige Stoff kondensiert ist; und
- ein geometrischer Parameter, der für die Größe des Bereiches der porösen zweiten Schicht, in welchem der adsorbierbare gasförmige Stoff kondensiert ist, repräsentativ ist;

wobei das Verfahren mehrere Schritte der scatterometrischen Erfassung in Abhängigkeit von der Dauer der Diffusion des adsorbierbaren gasförmigen Stoffes ins Innere der zweiten Schicht von den Flanken derselben aus aufweist, wobei auf jeden Erfassungsschritt ein Schritt der Bestimmung der theoretischen optischen Reaktion der Beugungsstruktur durch Anpassung des Brechungsindex und des geometrischen Parameters folgt.

**15.** Verfahren nach einem der Ansprüche 1 bis 4, **dadurch gekennzeichnet, dass** eine obere Schicht (35), die aus einem zu charakterisierenden durchlässigen Material ausgebildet ist, auf die Oberseite der Motive (32) aufgebracht wird, die aus einem porösen Material ausgebildet sind, wobei die Abweichung zwischen der experimentellen Reaktion bei einem gegebenen Druck und der theoretischen Reaktion kleiner als ein oder gleich einem gegebenen Schwellenwert gemacht wird, indem angepasst werden:

- der Brechungsindex des Materials des Bereiches der porösen Motive, in welchem der adsorbierbare gasförmige Stoff kondensiert ist; und
- ein geometrischer Parameter, der für die Größe des Bereiches der porösen Motive, in welchem der adsorbierbare gasförmige Stoff kondensiert ist, repräsentativ ist;

wobei das Verfahren mehrere Schritte der scatterometrischen Erfassung in Abhängigkeit von der Dauer der Diffusion des adsorbierbaren gasförmigen Stoffes ins Innere der Motive von den Flanken derselben aus aufweist, wobei auf jeden Erfassungsschritt ein Schritt der Bestimmung der theoretischen optischen Reaktion der Beugungsstruktur durch Anpassung des Brechungsindex und des geometrischen Parameters folgt.

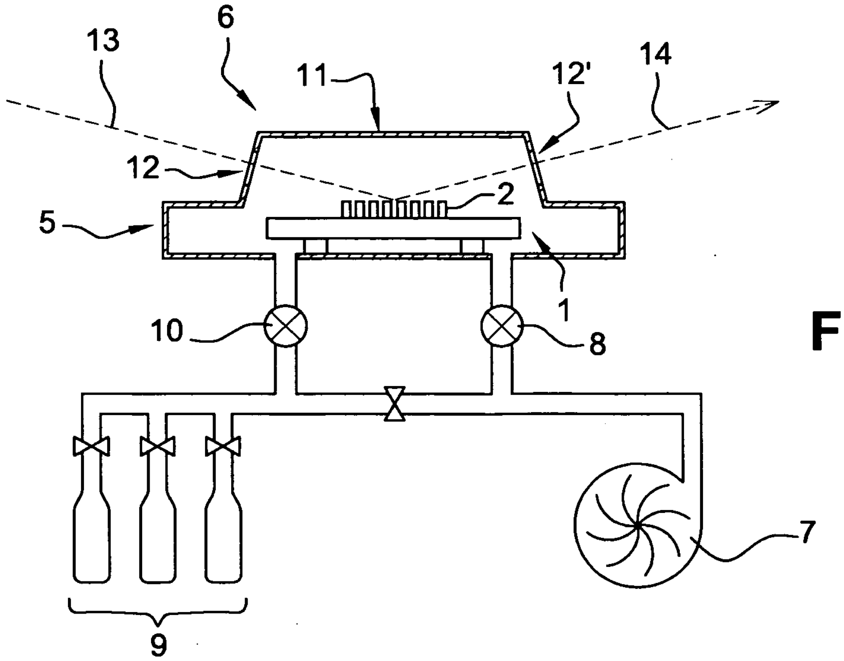


Fig. 1

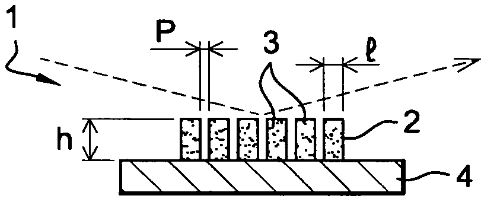


Fig. 2a

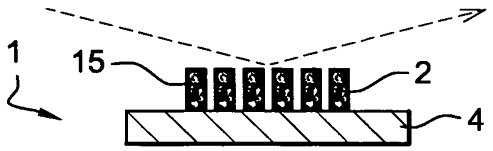


Fig. 2b

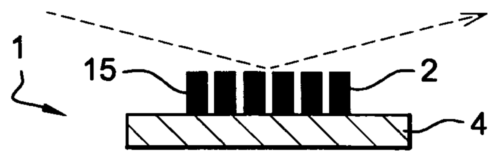


Fig. 2c

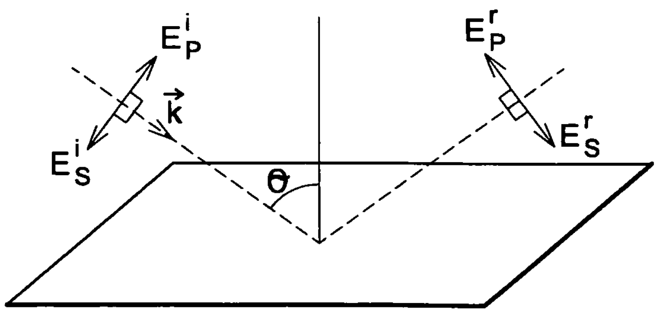


Fig. 3

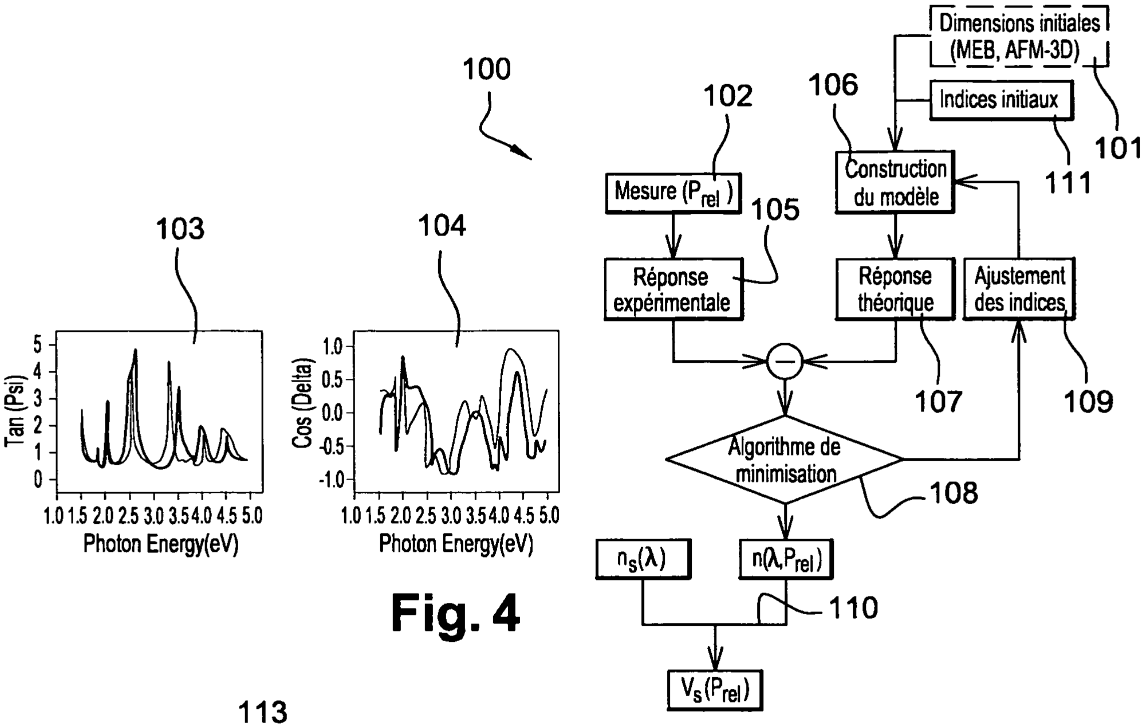


**Fig. 4**

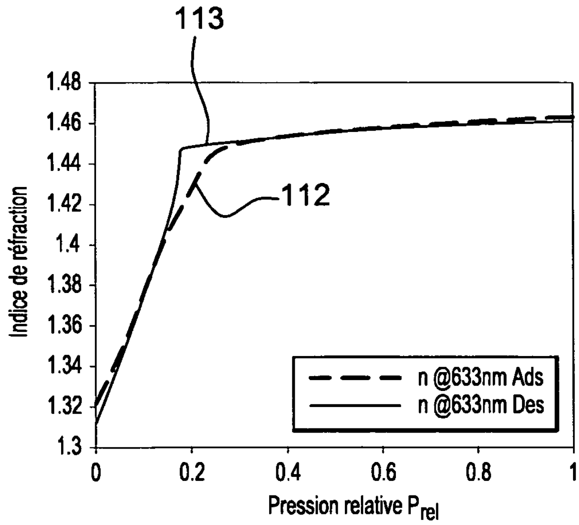


**Fig. 5**

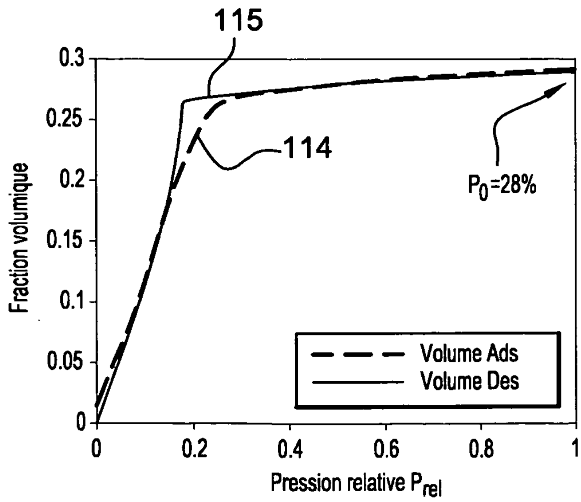


**Fig. 6**

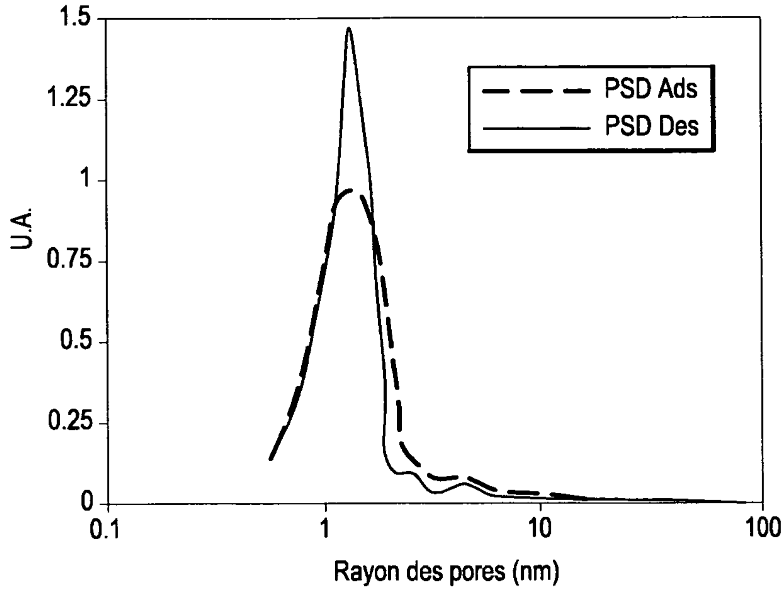


Fig. 7

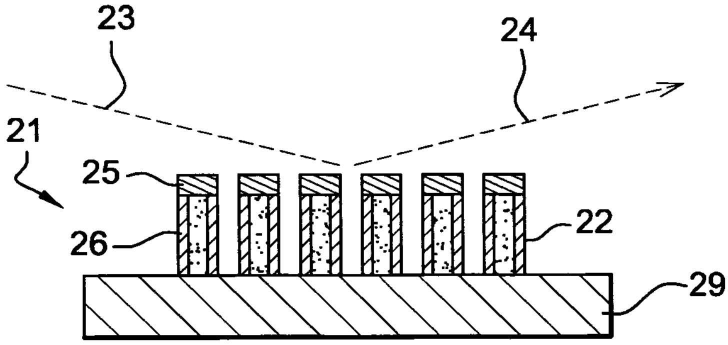


Fig. 8

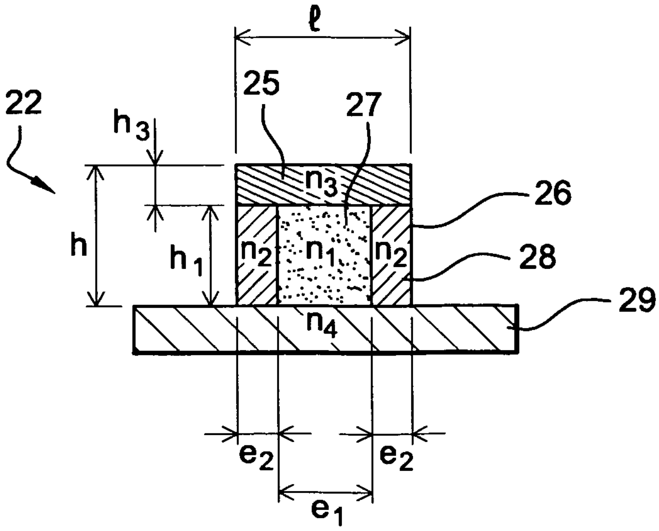


Fig. 9

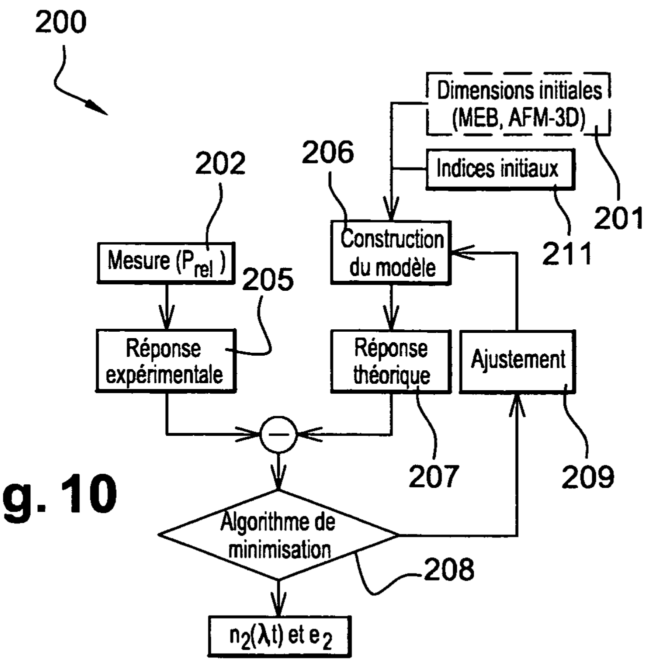


Fig. 10

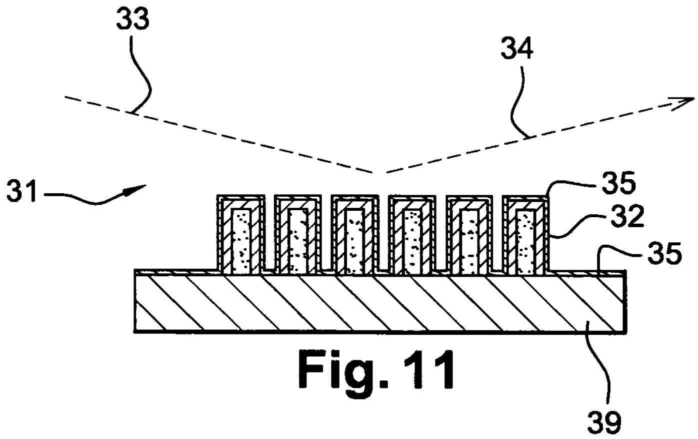


Fig. 11

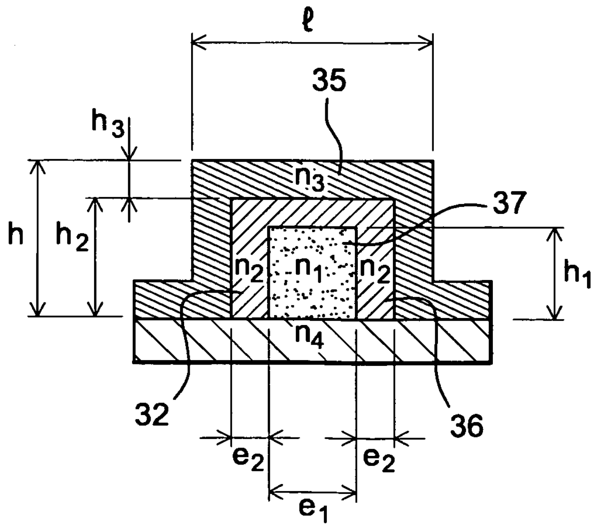


Fig. 12

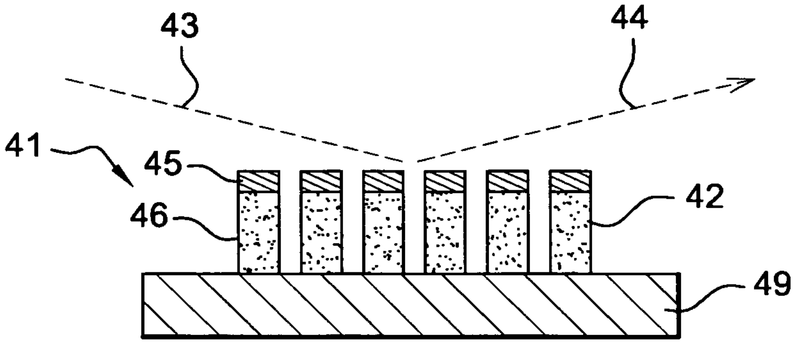


Fig. 13

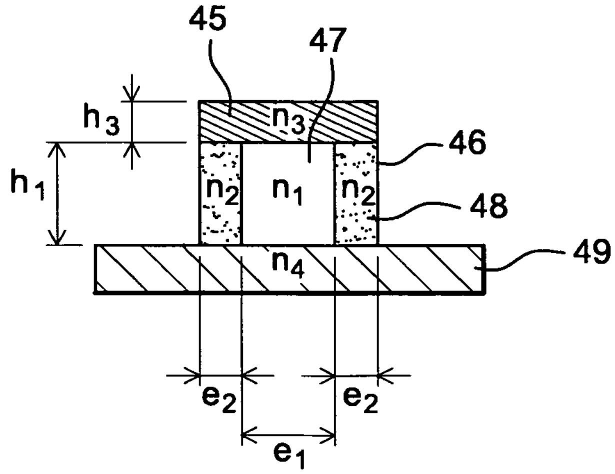


Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0012999 A
- US 20030168594 A1